# EUROPÄISCHE PATENTSCHRIFT

(11) **EP 0 296 461 B1**
(45) Veröffentlichungstag und Bekanntmachung des Hinweises auf die Patenterteilung: **10.05.1995**
(21) Anmeldenummer: 88109462.7
(22) Anmeldetag: 14.06.1988
(51) Int. Cl.: G01N 29/04

(54) **Verfahren zur Überprüfung von Bauteilen**
Process for the examination of components
Procédé pour l'essai de composants

(30) Priorität: 17.06.1987 DE 3720219
(43) Veröffentlichungstag der Anmeldung: 28.12.1988
(73) Patentinhaber: Betriebsforschungsinstitut VDEh Institut für angewandte Forschung GmbH, D-40042 Düsseldorf (DE)
(72) Erfinder: Coen, Günther, Dr., D-5653 Leichlingen 2 (DE); Oberhoff, Dietmar, D-5653 Leichlingen 2 (DE); Keck, Roland, Dr., D-4000 Düsseldorf (DE)
(74) Vertreter: Plöger, Ulrich

(56) Entgegenhaltungen:
- DE-A- 2 639 646
- DE-A- 2 917 539
- DE-A- 3 614 002
- US-A- 4 597 292
- RESEARCH TECHNIQUES IN NONDESTRUCTIVE TESTING, vol. VI, 1982, Academic Press, London, New York, Paris ; R.S. SHARPE : "Ultrasonic Synthetic-aperture Focusing Techniques in NDT", Seiten 1-47
- W.H. PRESS et al. : "Numerical Recipes", 1988 (Neudruck der Auflage von 1986), Cambridge, GB, Seiten 381-383
- ELEKTRONIK, 3/2.2.1990; Reinert H.G. MÜLLER : "Die Fouriertransformation in der Bildverarbeitung", Seiten 50, 55 und 56 (nachveröffentlicht)

## Beschreibung

Die Erfindung bezieht sich auf ein Verfahren zur Überprüfung von Bauteilen gemäß dem Oberbegriff des Patentanspruchs 1 bezeichneten Art.

Demnach zählen einerseits die noch in der Herstellung befindlichen Bauteile zum Anwendungsbereich des erfindungsgemäßen Verfahrens, während andererseits die bereits betrieblich eingesetzten Bauteile überprüft werden sollen.

Bei bekannten Verfahren dieser Art wird auf der Grundlage der sogenannten A-scans eine Prüfung vorgenommen. Dabei wird die Zeitachse der Wanddicke des Bauteils zugeordnet und ein empfangenes Signal in Richtung der Ordinate angezeigt, so daß man einen Fehlerabstand beispielsweise von der Rückwand angeben kann. Eine Weiterentwicklung stellen die B-scans dar, nach welchen der Ultraschallprüfkopf, wie im Oberbegriff des Patentanspruchs 1 angegeben, entlang einer Linie über das Werkstück geführt wird, die auch in einer Ebene gekrümmt sein kann, so daß der Ultraschallstrahl bei Führung des Ultraschallprüfkopf eine Fläche erfasst. Für innerhalb dieser Fläche festgestellten Fehlern läßt sich die Berandung darstellen, also die Linie, die zwischen der Fehleroberfläche und der sich damit in einer Linie schneidenden Bildkonstruktionsebene verläuft. Damit sagt der B-scan tatsächlich etwas über den Ort des Fehlers aus, wohingegen der A-scan nur eine Aussage in Bezug auf den Abstand des Fehlers von der Prüfkörperoberfläche angibt. Demzufolge ist der Informationsinhalt des B-scans in Bezug auf innere Fehler eines Bauteils bereits wertvoller.

Für eine noch weitergehende Fehlerrekonstruktion bedarf es der Führung des Ultraschallprüfkopf entlang einer Vielzahl von Linien oder aber des gleichzeitigen Einsatzes einer Vielzahl von Ultraschallprüfköpfen. Man kann den letzteren aber nicht mit dem gewünschten, geringen Abstand voneinander ausführen, so daß die Präzisierung der Fehlerortung dann geringer sein würde. Aus diesem Grunde wird mit geringen Abständen voneinander die Einleitung von Ultraschallimpulsen durch einen einzigen Ultraschallsender bevorzugt, für den dann die Signalverarbeitung im Rechner unter Berücksichtigung einer sogenannten synthetischen Apertur erfolgt. Auf diese Weise lassen sich beispielsweise 200 Prüfkopfpositionen derart dicht aufeinanderfolgend aufnehmen, wie sie auf Grund der physikalischen Apertur nicht verwirklichbar wären, ohne daß es zu gegenseitigen Überdeckungen oder Überschneidungen kommen würde.

Die bekannten Prüfverfahren gestatten es, fehlerhafte Bauteile im Anschluß an die Fertigung nach bruchmechanischen Kriterien umso besser zu erkennen, je vollständiger die Beschreibung der Fehlstellen, also bezüglich Form, Größe, Orientierung und Lage, gelingt. Von J. Seydel werden diese Verfahren in dem Aufsatz "Ultrasonic Synthetic-aperture Focussing Techniques in NDT" in: R.S. Sharpe (Ed.): Research Techniques in Nondestructive Testing, vol.VI (Academic Press, 1982), S. 1-47, beschrieben. Da die Erstellung eines Querschnittsbildes einen im Stundenbereich liegenden Zeitaufwand erfordert, ist die Einbeziehung dieses Verfahrens in ein allgemeines, auf die Herstellung und den Einsatz fehlerfreier Bauteile gerichteten Verfahrens schon aus diesem Grunde erheblich eingeschränkt.

Hierauf aufbauend führt die DE-OS 36 14 002 A1 zu einem Überprüfungsverfahren von in der Herstellung oder im Einsatz befindlichen Bauteilen mit inneren Fehlern mittels Ultraschall-Signalen, insbesondere von dickwandigen Bauteilen, wie Schmiedestücken, wobei ein Ultraschallprüfkopf entlang einer Linie über den Prüfkörperumfang geführt und den Ultraschall-Signalen nach einer A/D-Wandlung in einem Rechner elektronisch eine synthetische Apertur zugeordnet wird, welche Signale anschließend in einem Speicher dargestellt und mittels Transformation die Signalenveloppen gebildet sowie zur Auswertung gebracht werden.

Der damit vorgegebenen Gattung technischer Verfahren gehört auch die Erfindung an.

Bei der Ultraschallprüfung von Werkstücken soll der Ultraschallkopf in gleichmäßigem Abstand hierbei von der Oberfläche des Werkstückes mit gleicher Geschwindigkeit entlang eines Meßweges bewegt werden. Dies führt zur Erfassung von in einer bestimmten Tiefenlage befindlichen Fehlern. Die Ultraschallimpulse werden in der vorgebbaren, genau definierten Mindestlänge in das Werkstück eineschallt, worauf die Amplituden dar Echos einer vorgebbaren Tiefenschicht bestimmt werden. Daher eignet sich dieses Verfahren zur Bestimmung von Mikroporen und Mikrolunkern eines Werkstückes.

Vom gattungsgemäßen Stand der Technik der Erfindung ausgehend besteht deren Aufgabe darin, in erhöhtem Maße fehlerfreie Bauteile herzustellen sowie Schäden in Anlagen, in denen die Bauteile eingesetzt sind, herabzusetzen. Die Fehlerinformation einerseits sowie die zu treffenden Maßnahmen andererseits sollen vor allem dem Umstand Rechnung tragen, ob ein Fehler volumenhaft oder flächig ist, welche Fehlerabmessungen bestehen und wie flächige Fehler orientiert sind. Die zu erfassenden, fehlerhaften Gefügeänderungen reichen dabei von Gefügestörungen beim Vergißen des Stahles bis erst während des Betriebes auftretenden Störungen.

Die Erfindung löst diese Aufgabe durch die Vorschläge der Patentansprüche.

Auf Grund der quantitativ dokumentierten Untersuchungen sollen Maßnahmen sowohl für die Herstellung als auch für den Einsatz der Bauteile getroffen werden. Dabei soll auch die verfügbare Prüfdatendichte optimal genutzt werden, so daß den aus geometrischen Gründen häufig eingeschränkten Einsatzmöglichkeiten des Prüfkopfes entsprochen wird.

Die Erfindung löst die Aufgabenstellung durch den Vorschlag gemäß dem Kennzeichnungsteil des Anspruchs 1, für den die Vorschläge der Unteransprüche 2 bis 8 vorteilhafte Weiterentwicklungen vorsehen.

Während es bei den bekannt gewesenen Prüfungsverfahren lediglich zur Darstellung des jeweiligen Beugungsbildes des Fehlerrandes kommt, führt das erfindungsgemäße Verfahren zur Abbildung der Schallimpedanzänderung im Material des Bauteiles, so daß der Fehlerrand als solcher unverfälscht in Erscheinung tritt. Die auf diesem Wege erhaltenen Angaben über das Fehlermaß führen in Verbindung mit der erfindungsgemäßen Behandlung der Bauteile dazu, daß Herstellungsfehler herabgesetzt und Anlagenschäden vermieden werden.

Die erfindungsgemäß vorgeschlagene A/D-Wandlung ist dem Fachmann geläufig. Für die Mittelwertbildung wird von den allgemein bekannten Grundlagen Gebrauch gemacht, auf die sich beispielsweise H. Willems und K. Goebbels in "Metal Science" 15, 40 (1981) beziehen.

Die erfindungsgemäß vorgeschlagene A/D-Wandlung der empfangenen Signale erlaubt eine besonders einfache Art der Mittelwertbildung, indem die Summierschaltung zur Aufnahme der Signale verwendet wird. Die speziell vorgeschlagene Mittelwertbildung, wobei die von Störsignalen überlagerten Nutzsignale erfasst werden, führt dazu, daß eine erhebliche Verbesserung des Signal/Rausch--Verhältnisses in Abhängigkeit von der Anzahl der gemittelten Signale erreicht wird. Bei zwischen 60 bis 2000 Signalen verbessert sich das S/R-Verhältnis auf das 8-fache bis auf das 44-fache.

Unter der Anzahl der Signale wird im Sinne der Erfindung stets die für eine Querschnittsdarstellung aufgenommene Signalzahl verstanden. Die erfindungsgemäße Enveloppenbildung führt dazu, daß man zu einem demodulierten Signal kommt, welches die Auflösung selbst dicht benachbarter Einzelsignale besser gestattet.

Die erfindungsgemäß weiterhin vorgeschlagene Verdichtung der Signalenveloppen bei hoher Prüfdatendichte bzw. die Zerlegung der Signale bei geringer Prüfdatendichte ist mit der Bewertung der Signalenveloppen mit ihrer eigenen negativen Krümmung verbunden. Die Zerlegung gestattet es, die relevanten Teile des Signals zu erkennen, auf die eine Mustererkennung abzustellen ist, während es die Verdichtung erlaubt, einen sehr großen Datenbestand für eine Verarbeitung herabzusetzen, so daß sich die Rechenzeit erheblich verringert. Das Ergebnis der bildlichen Rekonstruktion steht somit schneller als ohne die erwähnte Verdichtung zur Verfügung. Die Verdichtung läßt ohne Berücksichtigung der Amplitude als solche lediglich noch eine Aussage darüber zu, ob ein Fehler überhaupt besteht. Dies vereinfacht die Addition der einzelnen Signale zum Zwecke einer bildlichen Fehlerrekonstruktion in einer Bildpunktmatrix.

Im Falle geringer Prüfdatendichte arbeitet das neue Verfahren hingegen als Mustererkennungssystem, das die Analyse von Mustern sowie die Klassierung von Mustern und Teilmustern gemäß eines zuvor entworfenen Klassifikationssystems durchführt. Bei allen Berechnungen wird das gesamte Prüfungssystem als eine Kettenschaltung linearer Übertragungssysteme aufgefasst, die durch deren jeweilige Impulsantwort beschrieben werden.

Die vor der Enveloppenbildung vorzunehmende Entfaltung hat Bedeutung im Hinblick auf die angestrebte Impulsform.

Man findet normalerweise bei Ultraschall-Prüfverfahren Delta-Impulse, soweit es technisch realisierbar ist. Durch die Eliminierung der Signalübertragungsfunktion gelingt es, das Sendesignal gefaltet mit der Übertragungsfunktion des Reflektors weitestgehend unverfälscht zurückzuerhalten. Das empfangene Signal als solches ist als ein Faltungsprodukt aus dem gesendeten Signal mit der Systemübertragungsfunktion aufzufassen. Daher bestehen Einflüsse des Sendegenerators, des Prüfkopfes, des Koppelmittels, des Werkstückes und des hiervon ausgehenden Rückweges bis zum Empfänger.

Die vorgeschlagene Entfaltung läßt sich außerdem als eine Verallgemeinerung der "Inversen Filterung" und der "Wiener-Filterung" interpretieren, da sie sich als Wiener-Filter für den Quotient zweier Spektren auffassen läßt. Da bei der expliziten numerischen Berechnung durch die dann erforderliche Einführung von Polarkoordinaten große unvermeidliche Rundungsfehler auftreten, wird die Entfaltung implizit mittels Iteration durchgeführt. Da sich bei der Entfaltung von physikalischen Signalen naturgemäß das Signal-Rausch-Verhältnis verschlechtert, wird im folgenden Verarbeitungsschritt ein Spline-Fitting des entfalteten Signals durchgeführt. Dazu wird das Verfahren des Spline-Fittings nach Reinsch benutzt. Bei dieser Vorgehensweise ergibt sich die Schätzfunktion für den rauschfreien Signalanteil als kontinuierliche Funktion, zu deren Konstruktion jedoch nur die diskreten Zeitkoordinaten und die zugehörigen digitalen Funktionswerte sowie deren Standardabweichungen benötigt werden. Im folgenden wird mit Hilfe der Hilberttransformation die exakte Enveloppe des Signals bestimmt. Über diese Funktion wird das Signal in seine einzelnen Fehler- und Formsignale zerlegt. Dabei wird eine Bewertung der lokalen Maxima nach deren Amplitude und Dauer durchgeführt. In einem ersten Verarbeitungsschritt wird die Krümmung der exakten Enveloppe berechnet, mit -1 multipliziert und die negativen Anteile des Produktes anschließend auf Null gesetzt. Hierdurch bekommt man eine Funktion, die jeweils von einem Signalwendepunkt zum nächsten bei negativer Signalkrümmung ungleich Null ist. Wichtet man diese Funktion mit der exakten Enveloppe, dann erhält man eine resultierende Funktion, bei der die durch Rauschspitzen hervorgerufenen Signalteile stark unterdrückt werden. Führt man für dieses Signal eine einfache Schwellenbewertung auf der Basis der Standardabweichung durch, so erhält man ein transformiertes Signal, das eine Zerlegung der exakten Enveloppe in seine Teilsignale darstellt. Es ist dadurch charakterisiert, daß diejenigen lokalen Maxima, die zu Fehler-und Formsignalen gehören, enthalten sind, nicht jedoch die zu Rauschspitzen gehörigen. Das Signal hat jedoch den Nachteil einer falschen Amplitudenbewertung. Definiert man aber mit Hilfe der Heaviside'schen Sprungfunktion zunächst ein binäres Signal und multipliziert dieses dann mit der exakten Enveloppe des Ursignales, so stellt die resultierende Funktion eine Zerlegung der Enveloppe in deren Teilsignal dar, ohne jedoch den Nachteil einer falschen Amplitudenbewertung der Fehler- und Formsignale zu implizieren.

Nachdem nun die Zerlegung des Musters "exakte Enveloppe" in Elementarmuster, d.h. in einzelne Fehler- und Formsignale erfolgt ist, werden im weiteren Verlauf der Auswertung nur noch solche Elementarmuster betrachtet.

Als erstes Merkmal der Elementarmuster wird die maximale Amplitude aus der Enveloppe berechnet. Die Schallaufzeit bis zum Zeitpunkt der maximalen Amplitude wird als zweites Merkmal bestimmt, die Phasendifferenz zwischen dem ursprünglichen HF-Signal und seiner Enveloppe bei der berechneten Schallaufzeit als drittes Merkmal.

Es zeigt sich, daß diese drei Merkmale das jeweilige Teilsignal hinreichend beschreiben. Zur Charakterisierung der zusammengesetzten Signale dient dann einmal die Anzahl der Teilsignale, in die sich das Gesamtsignal zerlegen läßt sowie deren jeweilige Merkmale.

Die bisher bestimmten Merkmale sind "Merkmale erster Stufe" für ein zusammengesetztes Signal und damit auch für den ursprünglichen A-scan, der diesem entstörten, entfalteten und demodulierten Signal zugrunde liegt. Aus diesen skalaren Merkmalen lassen sich zunächst "Muster zweiter Stufe" konstruieren, indem man nämlich als Funktion der Prüfkopfposition, mehrere solcher A-scans aufnimmt und in der beschriebenen Weise auswertet. Die Merkmale erster Stufe für ein Teilsignal werden damit zu Funktionen der Prüfkopfposition bzw. des Einschallwinkels, die außerdem noch parametrig vom halben Schallbündelöffnungswinkel des verwendeten Prüfkopfes abhängen.

Man kann diese Funktionen als "Muster zweiter Stufe" auffassen und erneut eine Merkmalsextraktion vornehmen. Dabei muß man jedoch beachten, daß bei geringer Prüfdatendichte die Muster zweiter Stufe nur an einigen Stützstellen bekannt sind. Hinzu kommt noch, daß die Funktionswerte an diesen Stützstellen mit Meßfehlern behaftet sind, die insbesondere für die Funktion der Phasendifferenz recht groß sind.

Es erweist sich daher als notwendig, mittels geeigneter Methoden der Ausgleichsrechnung Schätzfunktionen auf der Basis der meßfehlerbehafteten Datensätze zu ermitteln. Es zeigt sich, daß hierzu unabhängig von der Geometrie des Prüfobjektes, stets das bereits benutzte Verfahren des Spline-Fittings nach Reinsch sehr gut geeignet ist. Es ergibt sich indes außerdem, daß speziell bei ebener Prüfobjektoberfläche stattdessen auch einfach jeweils ein Ausgleichspolynom fünften Grades für jede Schätzfunktion genommen werden kann. In jedem Falle erhält man jedoch drei Muster zweiter Stufe, die aufgrund ihrer Berechnungsmethode explizit bekannt und mindestens zweimal stetig differenzierbar sind. Zur Gewinnung der "Merkmale zweiter Stufe" werden die drei Muster zweiter Stufe jeweils nach einem vollständigen orthogonalen Funktionssystem entwickelt.

Als "Merkmale zweiter Stufe" werden die ersten sechs Entwicklungskoeffizienten dieser drei Entwicklungen nach Orthogonalsystemen verwendet.

Hieraus ergeben sich dann für die drei Merkmale erster Stufe der Elementarmuster ingesamt 18 Merkmale zweiter Stufe zur Fehlercharakterisierung. Mit Hilfe eines Klassifikationssystems wird der 18-dimensionale Merkmalsvektor einer Musterklasse zugeordnet. Damit äquivalent ist eine Klassierung des durch den Merkmalsvektor charakterisierten Fehlers nach Form, Lage, Größe und Orientierung.

Es bleibt noch nachzutragen, daß sich aus der Pulsartfunktion für zusammengesetzte Signale ein zweiter Merkmalsvektor gewinnen läßt, indem man dieses Muster zweiter Stufe ebenfalls nach einem vollständigen, orthogonalen Funktionssystem entwickelt. Es ergibt sich jedoch, daß die in diesem zweiten Merkmalsvektor codierte Information eine redundante Entsprechung bereits in einer Teilmenge der Information findet, die der erste Merkmalsvektor enthält. Auf die Auswertung des zweiten Merkmalsvektors kann daher verzichtet werden.

Für den Fall einer hohen Prüfdatendichte führt das erfindungsgemäße Verfahren zu der Bildrekonstruktion in Form eines B-scans des Prüfkörper-Querschnitts einschließlich der darin enthaltenen Fehler. Die Prüfdatendichte von 100 bis 200 Abtastungen je Prüfobjekt reicht dabei als solche bereits aus. Bei dieser Prüfdatendichte ist die synthetische Apertur hinreichend, um das Fehlerbild daraus aufzubauen.

Die Signalvorverarbeitung kann nun wahlweise wie bei derjenigen für geringe Prüfdatendichte erfolgen, also durch Signalmittelung, digitale Filterung, Entfaltung und Enveloppenbildung. Andererseits läßt sich aber auch noch eine Vereinfachung durch Verzicht auf die Entfaltung erzielen. Dies wird, wie nachstehend zu beschreiben ist, dadurch möglich, daß bei der Rekonstruktion auf die Phaseninformation verzichtet wird. Die detektierten Fehler werden vielmehr abgebildet und lassen sich auf Grund ihres Videobildes nach Form, Lage, Größe und Orientierung zuverlässig bewerten.

Die Signalmittelung geschieht bei dieser Methode der Signalvorverarbeitung auf exakt die gleiche Weise wie zuvor beschrieben.

Ziel der digitalen Filterung ist eine weitere Verbesserung des Signal-Rausch-Verhältnisses. Die dazu benötigte Filterfuktion beschafft man sich durch Auswertung eines rauscharmen, gemittelten Empfangssignals für den Referenzreflektor "Rückwand". Anhand des durch dieses Signal gewonnenen Spektrums wird die obere Grenzfrequenz und die mittlere Frequenz der Filterfunktion bestimmt. Die definierte Filterfunktion erfüllt nun noch folgende Bedingungen: die Funktion ist beliebig oft differenzierbar; der Durchlaßanteil bei der Mittenfrequenz beträgt 99 %; die hochfrequenten Rauschanteile werden unterdrückt.

Von dem mit dieser Filterfunktion digital gefilterten Signal wird die exakte Enveloppe, auf genau die gleiche Art wie zuvor beschrieben, berechnet.

Zur Datenverdichtung der Signale läßt sich im Falle hoher Prüfdatendichte das gleiche Verfahren verwenden, das im Falle geringer Prüfdatendichte zur Signalzerlegung dient. Auf diese Weise wird, wie oben beschrieben, ein binäres Signal berechnet.

Die Rekonstruktion zerfällt bei diesem Verfahren in zwei Teile. Im ersten Teil werden als Funktion der Prüfkopfposition die binären Signale von sehr vielen A-scans berechnet und zur Bilderzeugung verwendet. Diese Vorgehensweise sei hier am Beispiel der eindimensionalen, azimutalen Prüfkopfbewegung auf der Mantelfläche eines zylindrischen Prüfobjektes erläutert. Die Prüfkopfposition sei dabei mittels Winkelkoordinate angegeben. Zur Beschreibung des zu erzeugenden B-Bildes führt man zunächst rechtwinklige, ebene kartesische Koordinaten ein. Nun berechnet man, unter Berücksichtigung der Prüfkopfposition und der möglichen Schallstrahlrichtungen innerhalb eines Schallbündels die möglichen elementaren Reflektorpunkte. Durch Addition der zugehörigen Binärsignalamplituden in eine entsprechende Bildpunktmatrix wird nacheinander unter Benutzung aller Binärsignale eine zweidimensionale Belegungshäufigkeit für die Existenz von möglichen Streuzentren berechnet.

Der zweite Teil der Rekonstruktion beim neuen Verfahren beinhaltet die Entstörung des Bildes durch Beseitigung von Pseudoanzeigen mittels Koinzidenzfilterung. Dabei wird maßgeblich die ortsabhängige Redundanz potentieller Streuzentren benutzt. Das wird dadurch möglich, daß das Urbild aus binären Signalen erzeugt wurde und der Bildpunktwert somit unmittelbar die Anzahl der Koinzidenzen darstellt, die für den jeweiligen Bildpunkt registriert wurden. Zur Berechnung der Redundanzfunktion wird nun ein synthetisches Referenzbild erzeugt. Interpretiert man nun das neue Verfahren als eine strahlenakustische Näherungsmethode der Fehler- und Objektrandrekonstruktion mittels Punktstrahlersynthese für Halbkreis-Richtcharakteristik, dann läßt sich mit der berechneten Redundanzfunktion das Urbild normieren.

Die Vorgabe des tolerablen Fehlermaßes geht von einem befriedigenden Bauteil aus, welches nach bruchmechanischen Kriterien einsetzbar ist, ohne daß Schäden zu erwarten sind. Volumenfehler dürfen dabei ein bestimmtes Ausmaß nicht überschreiten, während es bei flächigen Fehlern zusätzlich auf Lage und Orientierung ankommt, beispielsweise dürfte sich ein innerer Riß nicht unter der Einwirkung der Belastung fortsetzen. Zur Reduzierung eines Volumenfehlers läßt sich im Rahmen der Herstellung die Umformung derart weitgehend vornehmen, bis das tolerable Fehlermaß unterschritten ist. In vielen Fällen kann der Fehler auch durch eine entsprechende Verformung im Innern des Werkstückes verschweißen. Wesentlich ist, daß die Steuerung des weiteren Herstellungsprozesses den Fehlerbefunden Rechnung trägt. Bei einem eingesetzten Bauteil können innere Schäden beispielsweise durch interkristalline Korrosion oder durch Belastung entstehen. Der rechtzeitigen Erkennung eines derartigen Fehlers kommt für das weitere Schicksal der Anlage, für welche das Bauteil Anwendung findet, grundlegende Bedeutung zu. Demzufolge lassen sich Schäden nur durch sehr ausgedehnte Untersuchungen ausschließen. Andererseits gestattet eine kritische Bewertung des ermittelten Fehlers aber auch, den Ausbau von Bauteilen auf diejenigen fehlerhaften Teile zu beschränken, bei denen das tolerable Fehlermaß überschritten ist.

Der im Rahmen der Erfindung vorzunehmenden Ultraschalluntersuchung und Auswertung der Ultraschallsignale liegt der durch die nachstehenden Bestandteile charakterisierte apparative Aufbau zugrunde.

### Bewegung des US-Prüfkopfes:

Die Abtastung der Prüfkörper kann mit folgenden Verfahren durchgeführt werden:
Mit Hilfe eines Handhabungsgerätes (z.B. Industrieroboter)
Durch einen Einzweckautomaten (z.B. eine umgerüstete Drehbank)
Durch Handprüfung
Bei allen Prüfverfahren müssen entweder diskrete Punkte auf der Prüfkörperoberfläche nacheinander abgetastet werden oder es muß in einer kontinuierlichen Prüfung die Prüfkörperoberfläche abgefahren werden. Bei der zweiten Methode erreicht man bei geeigneter Vorschubgeschwindigkeit und Abtastfrequenz eine Ortsmittelung der US-Signale und hierdurch eine Unterdrückung von kohärenten Störsignalen. Bei allen Verfahren muß die Position des Prüfkopfes bezogen auf den Prüfkörper bestimmt und bei der Rekonstruktion berücksichtigt werden.

### Ultraschall-Prüfköpfe:

Für das Verfahren sind US-Prüfköpfe, die in der Rekonstruktionsfläche einen möglichst großen und senkrecht hierzu einen möglichst kleinen Öffnungswinkel besitzen, von Vorteil.

Diese Richtcharakteristik kann aber auch durch den Einsatz mehrerer Winkelprüfköpfe mit unterschiedlichen Einschallwinkeln erreicht werden. Die Prüfköpfe sollten außerdem möglichst breitbandig sein.

### Ultraschallsender:

Um den US-Prüfkopf möglichst breitbandig anzuregen, sollte die Impulsform des Sendeimpulses einer Deltafunktion möglichst gut angenähert werden.

### Ultraschallempfänger:

Der US-Empfänger sollte in seinem Übertragungsverhalten möglichst gut auf das Übertragungsband der US-Prüfköpfe angepasst werden. Insbesondere sollte eine Bandbeschneidung so durchgeführt werden, daß in dem nachgeschalteten A/D-Wandler ein Aliasing-Effekt weitestgehend verhindert wird.

### Verarbeitungs- und Steuereinheit:

Die Verarbeitung der US-Signale sowie die Steuerung des Gesamtsystems kann mit Hilfe eines modular aufgebauten Multiprozessorsystems erfolgen.

### Ausgabe- und Dokumentationseinheiten:

Die bildliche Rekonstruktion kann in Echtzeit in einem Bildspeicher mit z.B. 1024 x 1024 Bildpunkten bei 256 Farb- oder Grauwerten pro Punkt erfolgen. Die Dokumentation der Prüfergebnisse kann z.B. mit Hilfe von Massenspeichern wie Winchesterlaufwerken, laseroptischen Bildplatten, Videorekordern oder mit Hilfe eines Druckers oder Plotters erfolgen.

Zur weitergehenden Veranschaulichung der Erfindung wird auf die Zeichnungen Bezug genommen. Darin zeigen:
- Figur 1: die Gliederung der Signalverarbeitung des erfindungsgemäßen Verfahrens für geringe und hohe Prüfdatendichte,
- Figur 2: das Schema der Bilderzeugung und Bildbewertung,
- Figur 3: eine beispielsweise Prüfplatzanordnung bei einer Schmiedestückeuntersuchung,
- Figur 4: das Fehlerbild eines mit einer Bohrung versehenen Zylinders in einem ersten Rekonstruktionsschritt,
- Figur 5: das Fehlerbild entsprechend Figur 4 in einer weitergehenden Rekonstruktionsdarstellung,
- Figur 6: die Darstellung entsprechend Figur 4 nach Anwendung der Redundanz- bzw. Koinzidenzfilterung und
- Figur 7: eine räumliche Darstellung des Bildes entsprehend Figur 6.

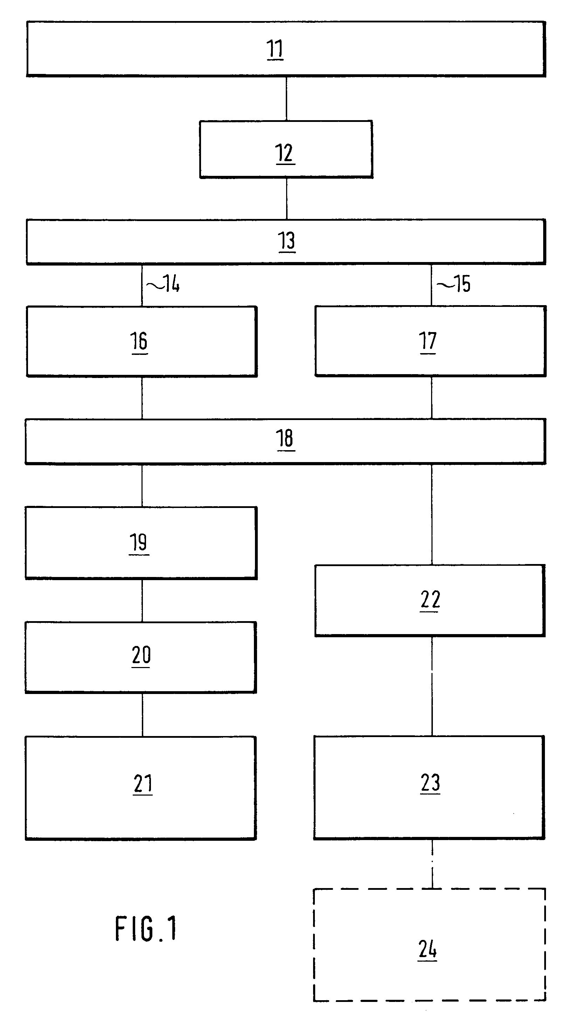

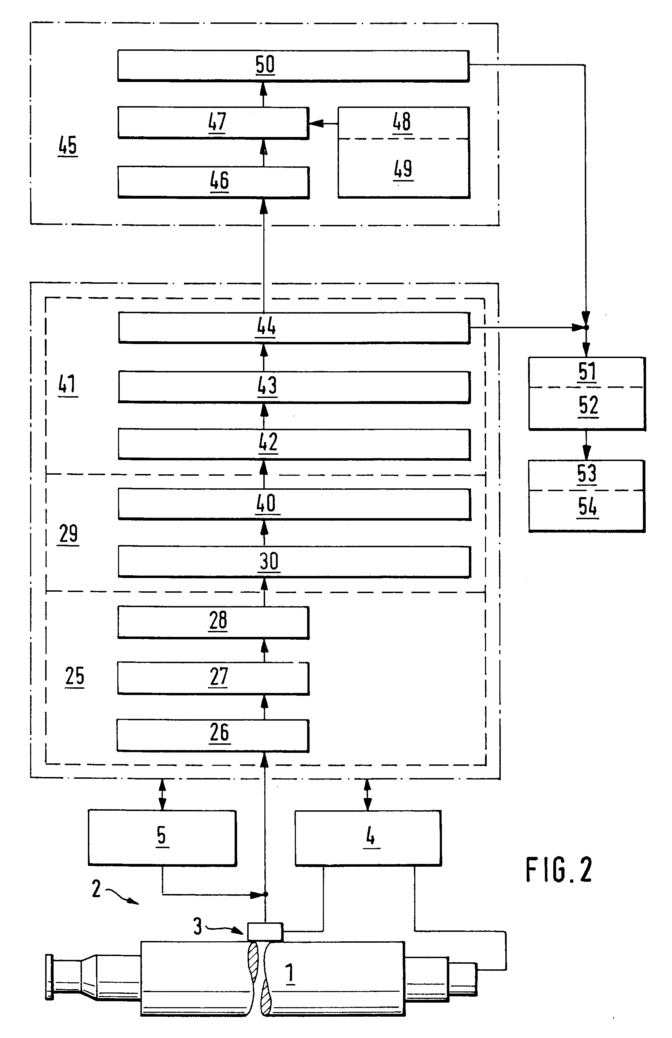

In Figur 1 und Figur 2 sind die einzelnen Verfahrensschritte namentlich in den Blöcken benannt, so daß insofern der Verlauf der Signalverarbeitung bis zur Bilderzeugung bzw. Fehlerbewertung ersichtlich ist. Für das vollständige erfindungsgemäße Verfahren kommt noch hinzu, daß ein tolerables Fehlermaß vorgegeben und mit dem Ergebnis der Signalverarbeitung verglichen wird. Die Vorgabe des Fehlermaßes sowie die vorgenommenen Vergleiche läßt sich in entsprechend angeschlossenen Blockbildern darstellen. Weiterhin zählt zum erfindungsgemäßen Verfahren die Weiterbehandlung von noch in der Herstellung befindlichen Bauteilen mit der Maßgabe der Unterschreitung des tolerablen Fehlermaßes bzw. die Entfernung und der Austausch von bereits eingesetzten Bauteilen für den Fall, daß die festgestellten Fehler das tolerable Fehlermaß überschreiten. Hierfür ist gleichfalls die Darstellung in angeschlossenen Blöcken möglich.

Im einzelnen zeigen die Figuren 1 und 2 in den einzelnen dern:

### FIGUR 1

- 11:: PPE-Verfahren Laufzeit, HF-Signal, Prüfkopfposition, Schallbündel-Öffnungswinkel, Redundanz
- 12:: Digitalisierung von Prüf- und Referenzsignal
- 13:: Signalmittelung: Signal/Rausch-Verbesserung
- 14:: Verarbeitungsweg für geringe Prüfdatendichte (≧10A-Bilder)
- 15:: Verarbeitung für hohe Prüfdatendichte (≧100A-Bilder)
- 16:: Digitale Filterung:
-Entfaltung (Normierung)
-Spline-fitting
(Signal/Rausch-Verbesserung)
- 17:: Digitale Filterung:
Signal/Rausch-Verbesserung
- 18:: Enveloppe: Demodulation
- 19:: Merkmalsextraktion
- 20:: Mustererkennung
- 21:: Detektion, Lokalisierung und Klassierung der Fehler nach Art, Größe und Orientierung
- 22:: Datenverdichtung
- 23:: Rekonstruktion: Abbildung des Prüfobjektes und der Fehler
- 24:: Expertensystem: automatische Auswertung der Bilder mit Bewertung der Fehler

### FIGUR 2

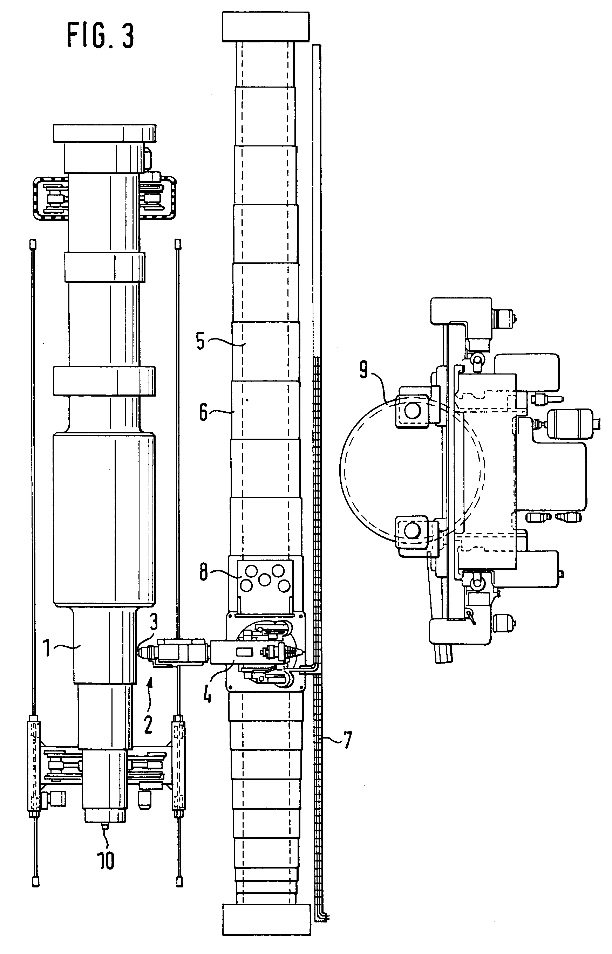

- 1:: Größere Welle (aus Figur 3)
- 2:: Ultraschallsystem
- 3:: Prüfkopf
- 4:: Manipulator/Roboter
- 5:: Ultraschallsender
- 25:: Signalaufnahme
- 26:: Vorverstärkung (linear/logarithmisch)
- 27:: A/D-Wandlung: Signal/Rausch-Verbesserung bis zu 33 dB
- 28:: Signaladdition: Es können bis zu 2000 Signale/s gemittelt werden
- 29:: Signalvorverarbeitung
- 30:: Verbesserung der Ortsauflösung der Signale
- 40:: Verdichtung der Signale
- 41:: Rekonstruktion
- 42:: Bildliche Rekonstruktion der Signale
- 43:: Normierung des Bildes
- 44:: Beseitigung von Pseudofehleranzeigen
- 45:: Expertensystem
- 46:: Fehlerlokalisierung
- 47:: Klassierung der Fehler
- 48:: Datenbank
- 49:: Fehlerklassen
- 50:: Bewertung der Fehler
- 51:: Darstellung
- 52:: Videobild + Hardcopy
- 53:: Archivierung
- 54:: Bildplatte, Magnetband

Die Prüfplatzanordnung entsprechend Figur 3 zeigt in linken Teil eine größere Welle 1, die der Untersuchung mittels eines Ultraschallsystems 2 unterliegt. Bei diesem Ultraschallsystem handelt es sich um eine herkömmliche Ausführungsform. Sie ist in üblicher Weise mit einem Prüfkopf 3 versehen, der mittels eines Roboters 4 derart auf die einzelnen Prüfpositionen einstellbar ist, daß die vorgesehene Fehleraussage bei einer vollen Wellenumdrehung gewonnen werden kann. Die Prüfpositionen können dabei von diskreten Einzelstellungen gebildet sein, sie können indes auch, was in vielen Fällen zweckmäßiger ist, bei einer entsprechend langsamen kontinuierlichen Bewegung zwischen Prüfkopf und Welle gegeben sein, sofern die in einer Prüfkopfposition abzugebende Impulsfolge zwischen 60 bis 2000 Signalen noch möglich ist. Es darf dabei zwischen der Oberfläche des Prüflings und dem Prüfkopf zu einer Verschiebung von höchstens einem Viertel des Durchmessers des für die Sendung und dem Empfang der Ultraschallwellen maßgeblichen Durchmessers des Prüfkopfes kommen. Man erreicht dann bei einer Wellenumdrehung ohne Schwierigkeiten einige 10⁵ Signale. Bei einer herabgesetzten Impulszahl von beispielsweise unter 100 Signalen je Prüfkopfposition verringert sich die Anzahl der Signale bei einer Wellenumdrehung entsprechend. In der Praxis erreicht man in etwa 3 Minuten eine volle Umdrehung.

Der Roboter 4 vermag den Prüfkopf seinerseits in einem begrenzten Sektor zu verschwenken, so daß für eine volle Umdrehung die Drehbewegung der zu untersuchenden Welle unerläßlich ist. Jedoch kann beispielsweise bei einer Verschwenkmöglichkeit des Prüfkopfes mittels des Roboters um 120° die Wellendrehung in drei Schritten um jeweils 120° ausgeführt werden, wobei der Roboter den Prüfkopf zu Beginn jedes Drehschrittes zunächst zurückfährt. Nach Einstellung auf einen der in der Regel drei Drehschritte ist es nicht notwendig, die Drehbewegung der Welle vollständig zu unterbrechen, so daß entsprechende Brems- und Beschleunigungskräfte nicht aufgebracht werden müssen. Vielmehr ist die vorgeschlagene Relativbewegung zwischen Prüfkopf und Oberfläche des Prüflings zulässig. Daher kann die Welle langsam weiterlaufen, während der Prüfkopf mittels des Roboters aufeinanderfolgend in seine Prüfkopfpositionen gebracht wird. Erst am Ende eines derartigen Sektors wird dann der Prüfling auf die erhöhte Geschwindigkeit beschleunigt, so, daß daran anschließend der Prüfkopf wiederum den nächsten Sektor in der gleichen Weise erfassen kann, während welchen Sektors die Drehung entsprechend dem vorherigen Sektor verlangsamt ist.

Der Abstand von einer Prüfkopfposition bis zur nächsten ergibt sich aus dem Quotienten des Prüfstückumfanges durch die Anzahl der vorgesehenen Prüfkopfpositionen, wobei es sich insbesondere um eine konstante Anzahl von 128 Prüfkopfpositionen handelt. Es kommt dabei in jeder einzelnen Prüfkopfposition zu der erwähnten Relativbewegung zwischen Prüfkopf und Werkstück infolge der Drehung des letzteren. Die in einer Prüfkopfposition gesendeten und empfangenen, zwischen 60 bis 2000 Signale unterliegen im Zuge der weiteren Signalverarbeitung der bereits beschriebenen Digitalisierung und Signalmittelung. Es ergeben sich im Anschluß daran für die einzelnen Prüfkopfpositionen die letzteren zahlenmäßig gleichen Prüfdaten, die in geringer Dichte oberhalb 10 Daten und in hoher Dichte oberhalb etwa 100 Daten vorliegen können.

Wenn in dieser Weise eine Gesamtumdrehung der Welle meßtechnisch erfasst wurde, kann der Prüfkopf mittels des Roboters axial verschoben werden, um alsdann die gesamte Umdrehung der Welle an einer anderen axialen Stelle zu erfassen. Das Ausmaß der axialen Verschiebung hängt von der erforderlichen Fehlerortungsauflösung ab. Die bei einer Umdrehung benannten, 128 Prüfkopfpositionen sind für den Fall, daß lediglich eine Mustererkennung vorgesehen ist, nicht erforderlich. Für diesen Fall reichen einzelne Prüfkopfpositionen aus.

Sofern der Prüfling als Vor- oder Zwischenprodukt noch konturarm zu bezeichnen ist, lassen sich die ermittelten Fehler durch die weitergehende Verformung des Prüflings derart reduzieren, daß das tolerable Fehlermaß unterschritten wird. Bei einem Fertigerzeugnis hat die vorzunehmende Prüfung in der bereits beschriebenen Weise den Sinn, bei Überschreitung der tolerablen Fehlermaße einen Ausbau vorzunehmen. Entsprechend müßte im Rahmen einer Abnahmeprüfung das unzulässig fehlerhafte Werkstück verworfen werden.

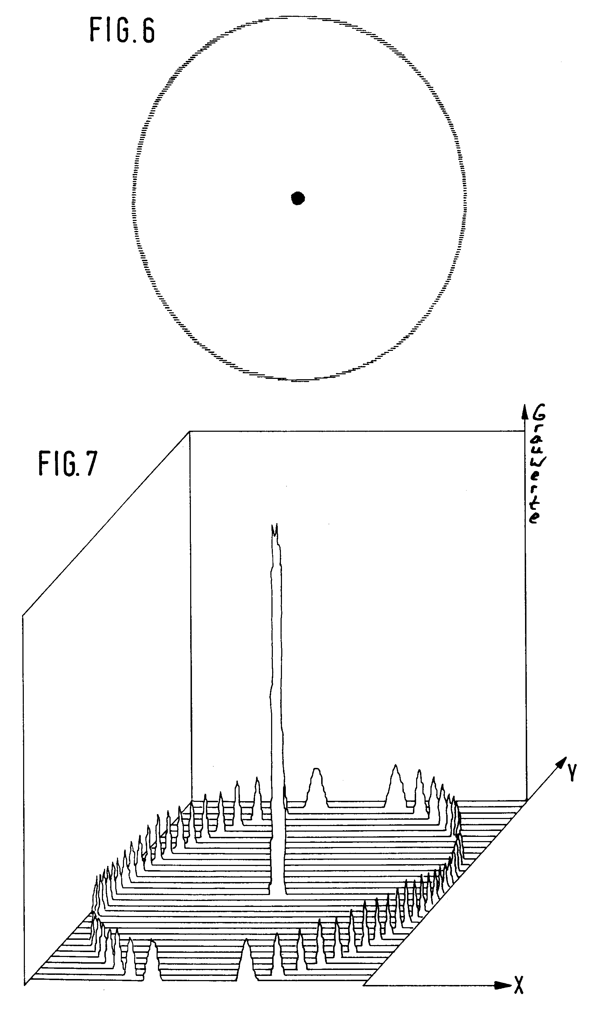

Der im oberen Teil der Figur 7 bezeichnete Roboter 4 ist entlang einer Fahrschiene 5 verfahrbar, für welche im Hinblick auf die häufig rauhen Betriebsbedingungen die verschiebliche Abdeckung 6 vorgesehen ist. Die Stromversorgung des Roboters 4 leitet sich dabei von Kabelschlepp 7 ab. Der Roboter 4 besitzt als solcher fünf Freiheitsgrade, während er einen sechsten Freiheitsgrad durch die Fahrschiene 5 erlangt. Neben dem Roboter 4 erkennt man ein Prüfkopfmagazin 8, aus welchem sich der Roboter 4 wahlweise bedienen kann. Beispielsweise ist gelegentlich ein Winkelprüfkopf für die Erfassung der Signale besser geeignet, in welchem Falle der Roboter 4 entsprechend eingesteuert wird, um sich den jeweils optimalen Prüfkopf auszuwählen.

Sofern der Verwendung des vorgeschlagenen holographischen Prüfkopfes Schwierigkeiten entgegenstehen, kann man einen derartigen Prüfkopf gleichfalls durch eine Vielzahl von einzelnen Prüfköpfen virtuell simulieren, die dann in einer zusammengesetzten Anordnung eine praktisch anarmophotische Abbildung gestatten. Die Ausbreitungsrichtung ist dabei plus/minus 5° in einer Richtung und in der dazu senkrechten Richtung plus/minus 50°, so daß sich in dieser Anordndung viele Aufgaben erfüllen lassen, für welche einzelne Prüfköpfe nicht zur Verfügung stehen.

Das rechte Teilbild der Figur 7 zeigt eine Karusseldrehbank 9 für die Aufnahme scheibenförmiger Prüflinge. Um einen derartigen Prüfling zu untersuchen, wird der Roboter 4 aus seiner in der Zeichnung dargestellten Lage um 180° verschwenkt, in welcher er dann den Prüfkopf auf den Umfang des scheibenförmigen Prüflings ausrichtet. Sinngemäß verläuft die Prüfung des scheibenförmigen Prüflings in entsprechender Weise wie im linken Teilbild, d.h., der scheibenförmige Prüfling wird in seiner Relation zum Prüfkopf unterschiedlich schnell bewegt, wobei der Prüfkopf mittels des Roboters 4 in die einzelnen Prüfkopfpositionen gesteuert wird.

Sowohl für die Drehbewegung eines wellenförmigen Prüflings als auch für die Drehbewegung eines scheibenförmigen Prüflings sind zweckmäßig Winkelgeber 10 vorgesehen, so daß die Dreheinstellungen auf einen Rechner übertragen werden, der die Bewegungsabläufe zwischen den Antrieben der Prüflinge und demjenigen des Roboters 4 in der erfindungsgemäßen Weise wie beschrieben harmonisiert.

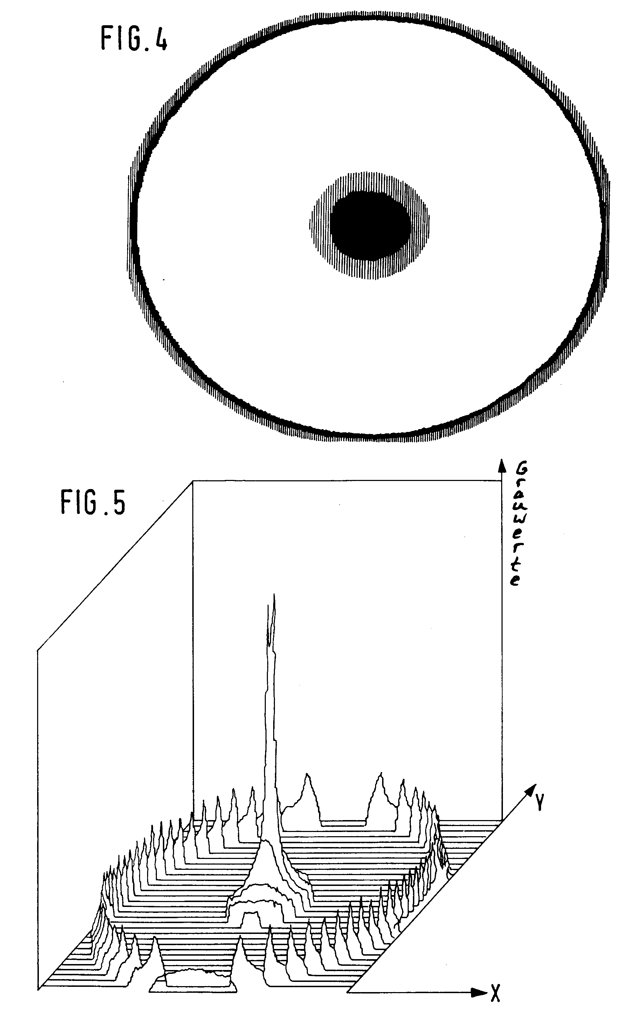

Der Darstellung in Figur 4 bis 7 liegt die Untersuchung eines Zylinders mit 80 mm Durchmesser zu Grunde. Als künstlicher Fehler war zentrisch-achsial eine Bohrung von 2 mm Durchmesser eingebracht. Das verwendete Material des Zylinders besitzt eine hohe inhomogene ortsabhängige Schallschwächung von durchschnittlich 2 dB/cm.

Bei den an diesem Körper gewonnen Signalen lag das Signal-Rausch-Verhältnis bei etwa 3,5 (ca. 11 dB). Mit diesen schlecht auswertbaren Signalen wurde die Leistungsfähigkeit des Verfahrens überprüft.

Der verwendete Ultraschallprüfkopf hatte einen halben Öffnungswinkel von 14,5°. Der Zylinder wurde in Schritten von 5° (72 Prüfkopfpositionen auf den Umfang) abgetastet.

Da der Zylinder einen Durchmesser von 80 mm hatte, betrug die Fehlerortsauflösung in der Rekonstruktionsebene ca. a=0,31 mm. Das Fehlernachweisvermögen bei den verwendeten US-Signalen betrug ca. d=0,30 mm, so daß die kleinsten gefundenen Fehler auch annähernd in ihrer wahren Größe darstellbar wurden. Die Figur 4 zeigt dieses rekonstruierte Bild als "Quasi-Grauwert-Darstellung", die mit einem Matrixdrucker erzeugt wurde. Bei dieser Darstellungsform wird der rekonstruierte Zylinderschnitt in einer Richtung verzerrt. Figur 5 zeigt die örtliche Grauwertverteilung in einer reliefartigen Darstellung. Man erkennt in dieser Darstellung gut, daß der Fehler in der Mitte des Zylinders mit einer größeren Wahrscheinlichkeit als der Zylinderrand rekonstruiert wird.

Pseudo-Anzeigen, die nicht durch eine Reflektion entstanden sind, werden unter Berücksichtigung der Sende- und Empfangscharakteristik beseitigt. Figur 6 zeigt das so gewonnene Bild, bei dem jeder Bildpunkt mit sehr hoher Wahrscheinlichkeit durch eine Ultraschallreflexion entstanden ist. Figur 7 zeigt das Grauwertrelief des so rekonstruierten Bildes.

## Patentansprüche

1. Verfahren zur Überprüfung von in der Herstellung oder im Einsatz befindlichen Bauteilen mit inneren Fehlern mittels Ultraschall-Signalen, insbesondere von dickwandigen Bauteilen, wie Schmiedestücken, wobei ein Ultraschallprüfkopf entlang einer Linie über den Prüfkörperumfang geführt und den Ultraschall-Signalen nach einer A/D-Wandlung in einem Rechner elektronisch eine synthetische Apertur zugeordnet wird, welche Signale anschließend in einem Speicher dargestellt und mittels Transformation die Signalenenveloppen gebildet sowie zur Auswertung gebracht werden,
dadurch gekennzeichnet,
daß die empfangenen Signale unter jeweiliger Zuordnung zu den ihnen entsprechenden physikalischen Bedingungen, wie Position und Orientierung des Prüfkopfes in Bezug auf das Zentrum des Bauteilquerschnittes, von einer Summierschaltung des Rechners aufgenommen werden und eine Mittelwertbildung erfahren, indem der Summenwert einer vorgegebenen Anzahl von von Störsignalen überlagerten Nutzsignalen in einer Divisionsschaltung durch die vorgegebene Anzahl dividiert wird, und daß die gemittelten Signale in das Faltungsprodukt aus der Fehler-Impuls-Antwort mit der Systemübertragungsfunktion aufgespalten werden und letztere eliminiert wird.
und daß in einer Rechenschaltung für jede Prüfkopfposition eine exakte Enveloppe mittels Hilbert-Transformation erzeugt wird,
und durch eine Funktion das Signal in seine einzelnen Fehler- und Formsignale zerlegt wird, und in einem ersten Bearbeitungsschritt die Krümmung der exakten Enveloppe berechnet, und
mit -1 multipliziert wird und die negativen Anteile des Produktes anschließend auf 0 derart gesetzt werden,
daß im Falle einer hohen Prüfdatendichte die Signalenveloppen verdichtet werden, während im Falle einer geringen Prüfdaten-Dichte die den Signalenveloppen zugrunde liegenden Signale zerlegt werden, welche Verdichtung bzw. Zerlegung mit der Maßgabe vorgenommen wird, daß eine Bewertung der Signalenveloppen mit ihrer eigenen negativen Krümmung durchgeführt wird,
und daß im Falle einer hohen Prüfdatendichte aus den verdichteten Signalenveloppen binäre Signale erzeugt werden, mit denen das Fehlerbild auf einem Bildschirm rekonstruiert wird,
während im Falle einer geringen Prüfdatendichte die Fehler auf Grund der zerlegten Signale nach Art, Lage, Größe und Orientierung klassiert werden,
und daß ein bei einem befriedigenden Bauteil gewonnenes, tolerables Fehlermaß bezüglich des Bildes, der Art, Lage, Größe und Orientierung des Fehlers vorgegeben sowie mit dem rekonstruierten Bild bzw. den klassierten Fehlerdaten der Prüfung verglichen wird,
und daß das überprüfte Bauteil bei Oberschreitung des Fehlermasses entweder im Verlaufe seiner weiteren Herstellung mit der Maßgabe der Verringerung seines Fehlermaßes unter das Toleranzmaß weiterbehandelt oder aus seiner Lage im Betrieb entfernt und ausgetauscht wird.

2. Verfahren nach Anspruch 1,
dadurch gekennzeichnet,
daß die nomierten Signalenveloppen vor der Filterung von einer Vielzahl von A-scans als Funktion der Prüfkopfposition ermittelt werden.

3. Verfahren nach den Ansprüchen 1 und 2,
dadurch gekennzeichnet,
daß die Signale vor der Enveloppenbildung mit der Maßgabe einer weiteren Verbesserung des Signal/Rausch-Verhältnisses mittels einer digitalen Filterfunktion gefiltert werden, die sich aus der Auswertung eines rauscharmen, gemittelten, von der Rückwand des zu prüfenden Werkstückes als Referenz-Reflektor ausgehenden Referenz-Empfangssignals ergibt.

4. Verfahren nach Anspruch 3,
dadurch gekennzeichnet,
daß für die Bildung der Filterfunktion die obere Grenzfrequenz und die Mittenfrequenz aus dem Spektrum eines rauscharmen Signals mit der Maßgabe bestimmt werden, daß bei der Mittenfrequenz ein Durchlaßanteil von etwa 99% und bei der oberen Grenzfrequenz ein Durchlaßanteil von etwa 1 % besteht.

5. Verfahren nach den Ansprüchen 1 bis 4,
dadurch gekennzeichnet,
daß der Ultraschallprüfkopf mittels eines mehrachsigen Roboters geführt wird und seine Stellungen und Richtungen auf jeder Prüflinie schrittweise aufeinanderfolgend einnimmt, wobei auch die Schrittfolge der Steuerung durch den Rechner unterliegt.

6. Verfahren nach den Ansprüchen 1 bis 5,
dadurch gekennzeichnet,
daß als Ultraschallsender und- Empfänger jeweils ein holographischer Prüfkopf verwendet wird.

7. Verfahren nach den Ansprüchen 1 bis 6,
dadurch gekennzeichnet,
daß der Ultraschallprüfkopf mit einer Frequenz von 300 kHz bis 20 MHz betreibbar ist, und daß eine Vorverstärkung im Bandbereich des Ultraschallsenders vorgenommen wird.

8. Verfahren nach den Ansprüchen 1 bis 7,
dadurch gekennzeichnet,
daß das mit dem Prüfkopf versehene Ultraschallsystem und das Bauteil bei der Messung relativ zueinander derart beweglich sind, daß die Verschiebung in der Prüflinie während einer für die Abgabe und den Empfang mehrfacher Signale vorgesehenen Prüfkopfposition höchstens 1/4 des Durchmessers der Abstrahlfläche des Prüfkopfes beträgt, wobei der Prüfkopf seine Prüfkopfpositionen in begrenztem Ausmaß der Prüflinie einnimmt,
und daß daraufhin der Prüfkopf ohne Ausführung von Messungen in seine Ausgangslage zurückgeführt und das Bauteil mit erhöhter Geschwindigkeit in gleichem Ausmaß weiterbewegt wird, woraufhin die Messung fortgesetzt wird.

## Claims

1. Method for inspecting by means of ultrasonic signals internally flawed parts, in particular thick-walled parts such as forgings, either during manufacture or when in use, whereby an ultrasonic probe is guided along a line over the circumference of the inspection specimen and the ultrasonic signals, after undergoing A/D conversion are associated electronically in a computer with a synthetic aperture, the said signals subsequently being represented in a memory and subjected to transformation to form signal envelopes for evaluation purposes,
characterized in that
the signals received, having been associated with the respective physical conditions, such as position and orientation of the probe in relation to the centreline of the part, are registered by a summation circuit in the computer and averaged, whereby the sum of a predetermined number of useful signals with superposed disturbance signals is divided in a division circuit by the predetermined number, and that the averaged signals are split into the aliasing product of the flaw pulse response and the system transmission function, and the latter is eliminated,
and that an exact envelope is generated for each probe position by means of Hilbert transformation in a computer circuit,
and that the signal is divided into its individual flaw and shape signals by a function, and in a first processing step, the curvature of the exact envelope is calculated, and
multiplied by -1 and the negative components of the product are subsequently set to 0, such that
in the event of high inspection data density, the signal envelopes are compressed, while in the event of a low inspection data density, the signals on which the signal envelopes are based are expanded, the said compression or expansion being undertaken with the aim of evaluating the signal envelopes with their own negative curvature,
and that in the event of a high inspection data density binary signals will be generated from the compressed signal envelopes, allowing the flaw image to be reconstructed on a screen,
while in the case of a low inspection data density, the flaws are classified by means of the expanded signals according to type, location, size and orientation,
and that a tolerable flaw limit in terms of image, type, location, size and orientation of the flaw is predetermined on an acceptable part and compared with the reconstructed image or the classified flaw data gained by inspection,
and that if the inspected part exceeds the flaw limit, it is either treated during downstream manufacturing with the aim of reducing the extent of the flaw to below the tolerance limit or is removed from its position in operation and replaced.

2. Method according to Claim 1,
characterized in that
the normalized signal envelopes are determined prior to filtration by means of a number of A-scans as a function of the probe position.

3. Method according to Claims 1 and 2
characterized in that
prior to envelope generation and with the aim of further improving the signal-to-noise ratio, the signals are filtered by means of a digital filter function resulting from the evaluation of a low-noise averaged reference signal received from the rear wall of the workpiece to be inspected as reference reflector.

4. Method according to Claim 3,
characterized in that
for the generation of the filter function, the upper limit frequency and the middle frequency of the spectrum of a low-noise signal are determined with the aim of achieving a transmissibility level of approximately 99% at the middle frequency and a transmissibility level of approximately 1% at the upper limit frequency.

5. Method according to Claims 1 to 4,
characterized in that
the ultrasonic probe is guided by means of a multi-axis robot and assumes its positions and directions in successive steps along each inspection line, whereby the sequence of steps is also controlled by the computer.

6. Method according to Claims 1 to 5,
characterized in that
the ultrasonic transmitter and receiver are in each case holographic probes.

7. Method according to Claims 1 to 6,
characterized in that
the ultrasonic probe may be operated at a frequency of 300 kHz to 20 MHz and that a pre-amplification is undertaken within the band range of the ultrasonic transmitter.

8. Method according to Claims 1 to 7,
characterized in that,
the ultrasonic system equipped with the probe and the part are movable relative to each other during measurement such that the shift along the inspection line while the probe is in one position intended for the transmission and reception of multiple signals is no greater than 1/4 of the diameter of the radiation surface of the probe, whereby the probe takes up its probe positions within the limited extent of the inspection line,
and that the probe is then returned to its initial position without any measurements being taken and the part is shifted by the same amount at high speed, after which the measurement is resumed.

## Revendications

1. Procédé de contrôle de composants en cours de fabrication ou d'utilisation avec défauts internes en particulier de composants à forte épaisseur, de pièces forgées, au moyen de signaux ultrasoniques, une tête de contrôle ultrasonique étant guidée le long d'une ligne autour de la périphérie du corps à contrôler et les signaux ultrasoniques étant affectés électroniquement, après une transformation analogue/digitale dans un ordinateur, à une ouverture synthétique représentant ensuite les signaux dans une mémoire et formant les enveloppes de signaux au moyen d'un transformateur pour les envoyer à l'analyse,
caractérisé en ce que les signaux reçus, affectés chacun aux conditions physiques leur correspondant, telles que position et orientation de la tête de contrôle par rapport au centre de la section du composant sont enregistrés par une commutation additive de l'ordinateur et soumis à formation d'une valeur moyenne, constituée par la division par le nombre indiqué de la valeur de somme d'un certain nombre de signaux utiles recouverts par des signaux parasites dans une commutation de division, et que les signaux pondérés sont divisés dans le produit de convolution provenant de la réponse d'impulsion de défaut avec la fonction de transfert de système, cette dernière étant éliminée,
en ce qu'une enveloppe exacte est constituée pour chaque position de la tête de contrôle au moyen d'une transformation de Hilbert dans une commutation de calcul ,
et que le signal est décomposé dans ses différents signaux de défauts et de formes, la courbure de l'enveloppe exacte étant calculée et multipliée par -1, et les parties négatives du produit étant ensuite mises à 0 de sorte telle que,
en cas d'une densité élevée de données de contrôle, les enveloppes de signaux soient comprimées, cependant que, dans le cas d'une faible densité de données, les signaux qui sont à la base de l'enveloppe sont décomposés, la compression ou la décomposition étant réalisée sous la condition qu'une évaluation des enveloppes de signaux étant réalisée avec leur propre courbure négative,
et que soient produits, dans le cas d'une densité élevée de données de contrôle des enveloppes de signaux comprimées, des signaux binaires avec lesquels l'image du défaut est reconstruite sur un écran,
cependant que, en cas de faible densité des données de contrôle, les défauts seraient classés selon le genre, la situation, la taille et l'orientation du défaut,
et que la mesure de défaut tolérable retirée d'une pièce satisfaisante en ce qui concerne le genre, la situation, la taille et l'orientation du défaut soit indiquée et comparée à l'image reconstituée ou aux données de défauts classées du contrôle,
et que la pièce soit ou traitée en cas de dépassement de la dimension de défaut au cours de sa production ultérieure avec la condition de la diminution de l'importance de son défaut sous la cote de tolérance, ou éliminée de sa situation dans l'entreprise et échangée.

2. Procédé selon la revendication 1,
caractérisé en ce que
les enveloppes de signaux précitées sont déterminées en tant que fonction de la position de la tête de contrôle avant la filtration d'un grand nombre de A-scans.

3. Procédé selon les revendications 1 et 2,
caractérisé en ce que
les signaux sont filtrés avant la formation d'enveloppe à la condition que le rapport signal/bruit soit encore amélioré au moyen d'une fonction de filtrage digitale résultant de l'évaluation d'un signal de réception de référence pondéré provenant de la paroi arrière de la pièce à contrôler en tant que réflecteur de référence.

4. Procédé selon la revendication 3,
caractérisé en ce que
pour la formation de la fonction de filtre, la fréquence limite supérieure et la fréquence moyenne sont déterminées à partir du spectre d'un signal à faible bruit, à la condition qu'il existe une proportion de passage d'environ 99 % pour les fréquences moyennes et une proportion de passage d'environ 1 % pour la fréquence limite supérieure.

5. Procédé selon les revendications 1 à 4,
caractérisé en ce que
la tête de contrôle ultrasonique est guidée au moyen d'un robot multi-axes et prend progressivement sa position et ses orientations sur chacune des lignes de contrôle, la succession des opérations étant également soumise à commande par l'ordinateur.

6. Procédé selon les revendications 1 à 5,
caractérisé en ce qu'
est utilisée, en tant qu'émetteur et récepteur ultrasonique, une tête de contrôle holographique chaque fois.

7. Procédé selon les revendications 1 à 6,
caractérisé en ce que
la tête de contrôle ultrasonique peut être utilisée avec une fréquence de 300 kHz à 30 MHz, et qu'une préamplification est réalisée dans la plage de bande de l'émetteur ultrasonique.

8. Procédé selon les revendications 1 à 7,
caractérisé en ce que
le système muni de la tête de contrôle et la pièce sont relativement mobiles l'une par rapport à l'autre lors de la mesure, de sorte telle que le déplacement sur la ligne de contrôle pendant une position de tête de contrôle prévue pour l'émission et la réception de signaux multiples représente au maximum 1/4 du diamètre de la surface de rayonnement de la tête de contrôle, la tête de contrôle prenant sa position de contrôle de manière limitée à partir de la ligne de contrôle,
et qu'ensuite la tête de contrôle est ramenée en position de départ sans réalisation de mesure, et la pièce continue à être déplacée à vitesse supérieure de la même dimension, la mesure étant poursuivie ultérieurement.
